# EUROPÄISCHE PATENTANMELDUNG

(11) **EP 3 034 919 A1**
(43) Veröffentlichungstag der Anmeldung: **22.06.2016**
(21) Anmeldenummer: 15199289.8
(22) Anmeldetag: 10.12.2015
(51) Int. Cl.: F16K 31/68, G05D 23/12, G05D 23/02, F01P 7/16, F16K 31/122

(54) **THERMOSTATVENTIL**

(30) Priorität: 16.12.2014 DE 102014226093
(71) Anmelder: Mahle International GmbH, 70376 Stuttgart (DE)
(72) Erfinder: Klein, Hans-Peter, 71397 Leutenbach (DE)
(74) Vertreter: BRP Renaud & Partner mbB Rechtsanwälte Patentanwälte Steuerberater

(57) **Zusammenfassung**

Die Erfindung betrifift ein Thermostatventil (1) mit
- einem Ventilgehäuse (7) und einem darin in einem Arbeitsraum (8) verstellbar gelagerten Arbeitskolben (9),
- einem in dem Arbeitsraum (8) angeordneten Dehnstoff (10) zur temperaturab-hängigen Verstellung des Arbeitskolbens (9).

Erfindungswesentlich ist dabei, dass der Arbeitsraum (8) hinsichtlich seines Rauminhalts reversibel anpassbar ist.

## Beschreibung

Die vorliegende Erfindung betrifft ein Thermostatventil mit einem Ventilgehäuse und einem darin in einem Arbeitsraum verstellbar gelagerten Arbeitskolben gemäß dem Oberbegriff des Anspruchs 1. Die Erfindung betrifft außerdem ein Kühlsystem einer Brennkraftmaschine mit einem solchen Thermostatventil sowie ein Kraftfahrzeug mit einer Brennkraftmaschine und einem derartigen Kühlsystem.

Aus der DE 100 48 792 A1 ist ein gattungsgemäßes Thermostatventil mit einem Ventilgehäuse und einem darin in einem Arbeitsraum verstellbar gelagerten Arbeitskolben bekannt. Ebenfalls in dem Arbeitsraum angeordnet ist ein Dehnstoffelement zur temperaturabhängigen Verstellung des Arbeitskolbens.

Aus der DE 1 221 871 ist ein stufenweise einstellbares Thermostatventil, beispielsweise zur Regelung eines Kühlmittelkreislaufes in einem Kühlsystem einer Brennkraftmaschine bekannt, bestehend aus einem Dehnstoffelement, aus dem bei Erwärmung ein Arbeitskolben gegen den Druck einer Schließfeder herausgedrückt wird, einem mit dem Dehnstoffelement fest oder begrenzt verschiebbar verbundenen Ventilteller sowie einem Ventilgestell mit einem Ventilsitzring, gegen den der Ventilteller bei einer im Sinne der Strömung gerichteten Schließbewegung zur Anlage kommt.

Generell werden Thermostatventile zur Regelung von Kühlsystemen in Kraftfahrzeugen, aber auch in Hausheizungen oder Industrieanlagen bereits mannigfaltig eingesetzt. Nachteilig bei den bekannten Thermostatventilen ist jedoch, dass deren Dehnstoff aufgrund einer starren Auslegung der Phasenwechseltemperatur auf die Betriebszustände einer Brennkraftmaschine nicht immer optimal und vor allem nicht sehr schnell reagieren kann. Das Volumen des Dehnstoffs ist dabei in bekannter Weise temperaturabhängig und vergrößert sich bei einem Phasenwechsel von fest nach flüssig. Hierdurch wird ein Verschieben des Arbeitskolbens bewirkt, der wiederum ein oder mehrere Ventilglieder betätigt. Um dabei auch bei Volllast mit maximaler Wärmeentwicklung, wie beispielsweise einer Anhängerbergfahrt oder einer Maximalgeschwindigkeit eine zuverlässige Kühlung der Brennkraftmaschine sicherstellen zu können, muss das Thermostatventil bei diesen Betriebszuständen den Arbeitskolben in eine Position verstellen, in der das gesamte Kühlmittel über den Kühlmittelkühler geleitet wird. Durch diese vergleichsweise starre Auslegung entsteht jedoch bei Betriebszuständen, in denen die Brennkraftmaschine nur in Teillast betrieben wird, häufig eine zu starke Kühlung der Brennkraftmaschine, so dass diese nicht auf ihrem optimalen Temperaturniveau betrieben werden kann.

Um dies zu umgehen, wurden bereits elektrisch beheizbare Thermostatventile, sogenannte Kennfeldthermostate entwickelt, bei denen die Phasenwechseltemperatur des Dehnstoffs um etwa 20 Kelvin oberhalb der sonst üblichen Phasenwechseltemperatur liegt. Dies erlaubt in Teillast einen Betrieb im optimalen Temperaturbereich der Brennkraftmaschine. Bei Volllast wird das Thermostatventil durch einen elektrischen Heizer erwärmt, wodurch der Phasenwechsel des Dehnstoffs unabhängig von der Kühlmitteltemperatur erfolgt.

Nachteilig bei sämtlichen aus dem Stand der Technik bekannten Thermostatventilen ist jedoch, dass die Reaktionsgeschwindigkeit derartiger Dehnstoffregler beim Öffnen und Schließen begrenzt ist. Insbesondere bei Brennkraftmaschinen mit hohen Leistungsdichten fallen beim Wechsel von der Teillast in die Volllast kurzfristig jedoch hohe Wärmemengen an. Diese müssen schnell über den Kühler abgeführt werden, um beispielsweise ein Klopfen zu vermeiden bzw. die Bauteiltemperatur zum Schutz vor kritischen Zuständen abzusenken. Hierzu erfolgt eine Absenkung der Kühlmitteltemperatur am Eintritt der Brennkraftmaschine. Umso schneller diese Absenkung erfolgen kann, umso besser kann die Brennkraftmaschine hinsichtlich ihres Temperaturniveaus betrieben werden. Auch beim Wechseln von Zuständen hoher Last zurück in die Teillast reagieren die aus dem Stand der Technik bekannten Thermostatventile vergleichsweise langsam, so dass das nun gewünschte höhere Kühlmitteltemperaturniveau nur mit Verzögerung erreicht werden kann.

Die vorliegende Erfindung beschäftigt sich daher mit dem Problem, für ein Thermostatventil der gattungsgemäßen Art eine verbesserte oder zumindest eine alternative Ausführungsform anzugeben, die sich insbesondere durch eine deutlich erhöhte Reaktionsgeschwindigkeit auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bedarfsabhängig einem in einem Arbeitsraum angeordneten Dehnstoff einen zusätzlichen Raum zur Verfügung zu stellen und damit durch Öffnen bzw. Verschließen dieses Zusatzraumes die Reaktionszeit des Thermostatventils deutlich zu reduzieren. Das erfindungsgemäße Thermostatventil besitzt dabei ein Ventilgehäuse mit einem darin in einem Arbeitsraum verstellbar gelagerten Arbeitskolben. Ebenfalls in dem Arbeitsraum angeordnet ist ein Dehnstoff bzw. Dehnstoffelement zur temperaturabhängigen Verstellung des Arbeitskolbens. Erfindungsgemäß ist nun dieser Arbeitsraum hinsichtlich seines Rauminhalts reversible anpassbar. Es wird somit ein zusätzlicher Ausdehnungsraum für den Dehnstoff geschaffen, der je nach Bedarf dem Dehnstoff bzw. den Dehnstoffelement zur Verfügung gestellt werden kann oder auch nicht. Soll beispielsweise der Arbeitskolben bei einer Kühlmitteltemperatur, welche oberhalb der Schmelztemperatur des Dehnstoffs liegt, wieder eingefahren werden, beispielsweise aufgrund eines kurzfristigen Übergangs von einem Volllastbetrieb in einen Teillastbetrieb, wird einfach der Rauminhalt des Arbeitsraums vergrößert, wodurch der federbeaufschlagte Arbeitskolben zumindest leicht zurück in den Arbeitsraum verstellt wird und dadurch eine Fluidströmung in Richtung eines Kühlmittelkühlers zumindest reduziert. Durch Schaffen des vergrößerten Rauminhalts des Arbeitsraums wird dem Dehnstoff ermöglicht, diesen Zusatzraum auszufüllen, wodurch der Arbeitskolben in die Dose/Arbeitsraum zurückfährt und sich dadurch das Thermostatventil zumindest leicht schließt. Durch die damit einhergehende Vergrößerung des den Kühlmittelkühler umgehenden Bypassstroms kann die Temperatur des Kühlmittels schneller angehoben werden. In gleicher Weise ist selbstverständlich auch durch eine Reduzierung des für den Dehnstoff zur Verfügung stehenden Rauminhalts im Arbeitsraum ein schnelleres Öffnen des Thermostatventils möglich, wodurch schneller beispielsweise der gesamte Kühlmittelstrom über den Kühlmittelkühler geleitet und dadurch das Temperaturniveau des Kühlmittels schneller abgesenkt werden kann. Dies ist insbesondere dann von Vorteil, wenn ein schneller Übergang von einem Teillastbetrieb in einen Volllastbetrieb erfolgt.

Bei einer vorteilhaften Weiterbildung der erfindungsgemäßen Lösung ist ein kolbenartiges Stellglied vorgesehen, welches in einem mit dem Arbeitsraum in Kontakt stehenden Zusatzraum verstellbar gelagert ist und durch eine Verstellen den Rauminhalt des Zusatzraums und damit des den Dehnstoff zur Ausdehnung insgesamt zur Verfügung stehenden Raums vergrößert/verkleinert. Das vorgesehene kolbenartige Stellglied kann dabei mittels eines Aktuators, beispielsweise einer Unterdruckdose, eines Elektromotors oder eines Hubmagneten, verstellt werden. Mittels des kolbenartigen Stellglieds ist ein vergleichsweise schnelles Anpassen des Rauminhalts des Arbeitsraums durch zur Verfügung stellen bzw. durch Wegnahme eines entsprechenden Zusatzraumes möglich.

Zweckmäßig weist der Dehnstoff einen Schmelzpunkt von 85 °C auf. Durch die Wahl des Schmelzpunktes des Dehnstoffs wie bei klassischen Thermostatventilen ist dieses auf den maximalen Kühlleistungspunkt ausgelegt, wodurch auch bei einem Ausfall des Aktuators und damit des Stellgliedantriebs ein zuverlässiges Kühlen und damit ein zuverlässiger Betrieb der Brennkraftmaschine sichergestellt werden kann. Zweckmäßig ist das Stellglied stufenlos verstellbar. Um ein möglichst bedarfsgerechtes und individuelles Verstellen des Stellgliedes und damit Öffnen bzw. Schließen des Thermostatventils erreichen zu können, ist es von Vorteil, sofern das Stellglied stufenlos verstellbar ist. Durch die stufenlose Verstellbarkeit des Stellglieds sind auch minimalste Anpassungen problemlos machbar. Alternativ ist selbstverständlich auch vorstellbar, dass das Stellglied ausschließlich zwischen zwei Endstellungen verstellbar ist und dadurch in der ersten Endstellung keinen Zusatzraum und in der zweiten Endstellung 100% des Zusatzraums zur Verfügung stellt. Auch hierdurch kann selbstverständlich vergleichsweise schnell Einfluss auf eine Öffnungs- bzw. Schließbewegung des Thermostatventils genommen werden.

Die vorliegende Erfindung beruht weiter auf dem allgemeinen Gedanken, ein zuvor beschriebenes Thermostatventil in einem Kühlsystem einer Brennkraftmaschine, insbesondere in einem Kraftfahrzeug, einzusetzen. Insbesondere in Kraftfahrzeugen sollten die dort eingesetzten Brennkraftmaschinen optimal und das heißt bedarfsgerecht gekühlt werden, um beispielsweise den Kraftstoffverbrauch zu senken und die Belastungen der Brennkraftmaschine so klein wie möglich zu halten. Aufgrund von Bergfahrten bzw. anderen Fahrbedingungen kommt oftmals auch ein schneller Wechsel zwischen Teillastbetrieb und Volllastbetrieb zustande, worauf mit dem erfindungsgemäßen Thermostatventil vergleichsweise schnell und damit optimiert reagiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: ein erfindungsgemäßes Kraftfahrzeug mit einem Kühlsystem und einem darin eingesetzten, erfindungsgemäßen Thermostatventil,
- Fig. 2a: eine Schnittdarstellung durch ein erfindungsgemäßes Thermostatventil bei einer Temperatur, welche kleiner als eine Schmelztemperatur eines darin angeordneten Dehnstoffs,
- Fig. 2b: eine Darstellung wie in Fig. 2a, jedoch bei einer Temperatur die größer ist als die Schmelztemperatur des Dehnstoffs,
- Fig. 2c: eine Darstellung wie in Fig. 2b, jedoch mit verstelltem Stellglied und teilweise eingefahrener Arbeitskolben.

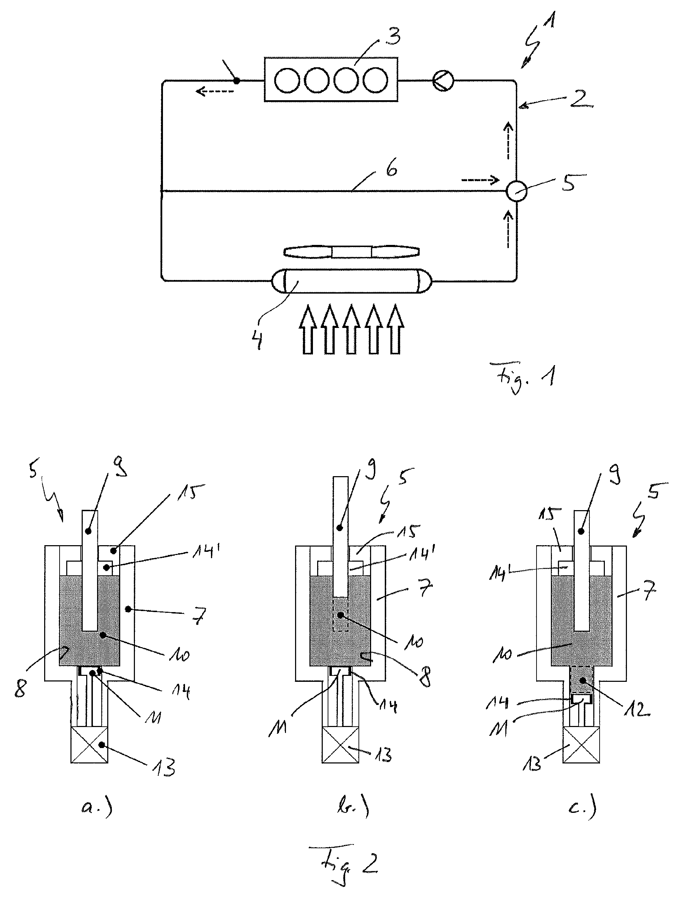

Entsprechend der Fig. 1 weist ein erfindungsgemäßes Kraftfahrzeug 1 ein Kühlsystem 2 zur Kühlung einer Brennkraftmaschine 3 auf. In dem Kühlsystem 2 ist ein Kühler 4 angeordnet, mittels welchem das durch die Brennkraftmaschine 3 strömende Kühlmittel gekühlt werden kann. Über ein erfindungsgemäßes Thermostatventil 5, welches gemäß den Fig. 2a bis 2c ausführlich in einer Schnittdarstellung dargestellt ist, kann der durch den Kühler 4 oder eine diesen umgehende Bypassleitung 6 strömende Kühlmittelstrom gesteuert bzw. geregelt werden.
Das erfindungsgemäße Thermostatventil 5 besitzt ein Ventilgehäuse 7 sowie einen darin in einem Arbeitsraum 8 verstellbar gelagerten Arbeitskolben 9. Ebenfalls in dem Arbeitsraum 8 angeordnet ist ein Dehnstoff 10 zur temperaturabhängigen Verstellung des Arbeitskolbens 9. Über den Arbeitskolben 9 wiederum wird beispielsweise nicht dargestellter Ventilteller betätigt und damit das Thermostatventil 5 geöffnet bzw. geschlossen.

Erfindungsgemäß ist nun der Arbeitsraum 8 hinsichtlich seines Rauminhalts reversibel anpassbar und zwar mittels eines kolbenartigen Stellgliedes 11, das in einem mit dem Arbeitsraum 8 in Kontakt stehenden Zusatzraum 12 verstellbar gelagert ist und durch ein Verstellen den Rauminhalt des Zusatzraums 12 und damit des dem Dehnstoff 10 zur Ausdehnung insgesamt zur Verfügung stehenden Raums vergrößert bzw. verkleinert. Das Stellglied 11 ist mit einem Aktuator 13 über diesen verstellbar, wobei dieser Aktuator 13 beispielsweise als Unterdruckdose, als Elektromotor oder als Hubmagnet ausgebildet sein kann. Das Stellglied 11 ist dabei über eine Dichtung im Zusatzraum 12 abgedichteter verstellbar. Das Stellglied 11 ist vorzugsweise mittels des Aktuators 13 stufenlos verstellbar, wobei selbstverständlich auch alternativ vorstellbar ist, dass das Stellglied 11 ausschließlich zwischen zwei Endstellungen verstellbar ist. Solche zwei Endstellungen sind beispielsweise in den Fig. 2b und 2c dargestellt. Der Arbeitskolben 9 ist darüber hinaus durch ein Führungsteil 15 geführt, wobei eine Dichtung 14' den Arbeitsraum 8 gegenüber dem Führungsteil 15 abdichtet.

Gemäß der Fig. 2a liegt die Temperatur des im Kühlsystem 2 strömenden Kühlmittels unterhalb der Schmelztemperatur bzw. Phasenwechseltemperatur des Dehnstoffs 10, so dass dieser noch in seinem festen Zustand ist. Der Arbeitskolben 9 ist in diesem Zustand eingefahren. Bei dem gemäß der Fig. 2b dargestellten Zustand liegt die Temperatur des Kühlmittels oberhalb der Schmelztemperatur bzw. der Phasenwechseltemperatur des Dehnstoffs 10, wodurch dieser von einem festen Zustand in einen flüssigen Zustand übergegangen ist und hierbei eine Volumendehnung erfahren hat. Da der Rauminhalt des Arbeitsraums 8 in diesem Zustand begrenzt ist, kann die Volumenzunahme des Dehnstoffs 10 ausschließlich durch ein Ausfahren des Arbeitskolbens 9 kompensiert werden, wobei in diesem Zustand beispielsweise der ausgefahrene Arbeitskolben 9 das Thermostatventil öffnet und dadurch mehr oder vorzugsweise das gesamte Kühlmittel über den Kühler 4 leitet und damit die Temperatur des Kühlmittels absenkt. Der gemäß der Fig. 2b dargestellte Zustand kann beispielsweise einen Volllastbetrieb betreffen.

Wird nun von dem gemäß der Fig. 2b gezeigtem Volllastbetrieb vergleichsweise schnell in einen Teillastbetrieb gewechselt, bei welchem die erforderliche Kühlung der Brennkraftmaschine 3 deutlich reduziert wäre, so würde bei einem herkömmlichen Thermostatventil eine Reduzierung des durch den Kühler 4 strömenden Kühlmittels erst durch eine Volumenreduzierung des Dehnstoffs 10 erreicht werden. Um dies jedoch schneller erreichen zu können, weist das erfindungsgemäße Thermostatventil 1 das verstellbare Stellglied 11 auf, welches gemäß der Fig. 2c vom Aktuator 13 zurückgezogen wird und dadurch einen für den Dehnstoff 10 zusätzlich zur Verfügung stehenden Zusatzraum 12 öffnet. Dieser Zusatzraum 12 vergrößert den insgesamt für den Dehnstoff 10 zur Verfügung stehenden Rauminhalt, der sich nunmehr aus dem Rauminhalt des Arbeitsraumes 8 und des Zusatzraums 12 zusammensetzt. Der Begriff des reversiblen Rauminhalts des Arbeitsraums 8 bezieht sich somit stets auf die Summe des Rauminhalts des Arbeitsraums 8 und des Zusatzraums 12. Hierdurch kann der Dehnstoff 10 in den Zusatzraum 12 ausweichen und dadurch den Arbeitskolben 9 zumindest ein Stück einfachen, was zu einer Schließbewegung des Thermostatventils 1 und damit zu einer reduzierten durch den Kühler 4 strömender Kühlmittelströmungen führt.

Bei einem Übergang gemäß der Fig. 2c dargestellten Teillastbetrieb hin zu einem Volllastbetrieb, bei welchem vergleichsweise schnell viel Abwärme an der Brennkraftmaschine 3 auftritt, die ebenfalls schnell abgeführt werden muss, kann durch ein Herausdrücken des Stellglieds 11 der Zusatzraum 12 verkleinert werden und damit ein vergleichsweise schnelles Öffnen des Thermostatventils 1 erreicht werden.

Der Dehnstoff 10 besitzt üblicherweise einen Schmelzpunkt von ca. 85 °C und ermöglicht somit auch bei einem Ausfall des Stellglieds 11 ein zuverlässiges Kühlen der Brennkraftmaschine 3 unter Volllast.

Mit dem erfindungsgemäßen Thermostatventil 1 kann somit vergleichsweise schnell auf geänderte Betriebsbedingungen der Brennkraftmaschine 3 reagiert und diese damit optimal temperiert werden.

## Patentansprüche

1. Thermostatventil (5) mit
- einem Ventilgehäuse (7) und einem darin in einem Arbeitsraum (8) verstellbar gelagerten Arbeitskolben (9),
- einem in dem Arbeitsraum (8) angeordneten Dehnstoff (10) zur temperaturabhängigen Verstellung des Arbeitskolbens (9),
**dadurch gekennzeichnet, dass**
der Arbeitsraum (8) hinsichtlich seines Rauminhalts reversibel anpassbar ist.

2. Thermostatventil nach Anspruch 1,
**dadurch gekennzeichnet, dass**
ein kolbenartiges Stellglied (11) vorgesehen ist, welches verstellbar ist und in verstelltem Zustand einen mit dem Arbeitsraum (8) in Kontakt stehenden Zusatzraum (12) öffnet dadurch den Rauminhalt des dem Dehnstoff (10) zur Ausdehnung insgesamt zur Verfügung stehenden Raums vergrößert.

3. Thermostatventil nach Anspruch 2,
**dadurch gekennzeichnet, dass**
das Stellglied (11) mit einem Aktuator (13) verbunden und über diesen verstellbar ist.

4. Thermostatventil nach Anspruch 3,
**dadurch gekennzeichnet, dass**
der Aktuator (13) als Unterdruckdose, als Elektromotor oder als Hubmagnet ausgebildet ist.

5. Thermostatventil nach einem der Ansprüche 2 bis 4,
**dadurch gekennzeichnet, dass**
das Stellglied (11) stufenlos verstellbar ist.

6. Thermostatventil nach einem der Ansprüche 2 bis 4,
**dadurch gekennzeichnet, dass**
das Stellglied (11) zwischen zwei Endstellungen verstellbar ist.

7. Thermostatventil nach einem der Ansprüche 1 bis 6,
**dadurch gekennzeichnet, dass**
der Dehnstoff (10) einen Schmelzpunkt zwischen 80 und 90 °C aufweist.

8. Kühlsystem (2) einer Brennkraftmaschine (3) mit einem Thermostatventil (5) nach einem der Ansprüche 1 bis 7.

9. Kraftfahrzeug (1) mit einer Brennkraftmaschine (3) und einem Kühlsystem (2) nach Anspruch 8.
